# EUROPÄISCHE PATENTSCHRIFT

(11) **EP 1 534 057 B1**
(45) Veröffentlichungstag und Bekanntmachung des Hinweises auf die Patenterteilung: **13.12.2006**
(21) Anmeldenummer: 03792200.2
(22) Anmeldetag: 16.07.2003
(51) Int. Cl.: A01C 7/10

(54) **AUFFANGWANNE**
COLLECTOR TRAY
BAC COLLECTEUR

(30) Priorität: 14.08.2002 US 218647
(43) Veröffentlichungstag der Anmeldung: 01.06.2005
(73) Patentinhaber: DEERE & COMPANY, Moline, Illinois 61265-8098 (US)
(72) Erfinder: MARIMAN, Nathan, Albert, Geneseo, IL 61254 (US); HAGEN, Matthew, Brian, Bettendorf, IA 52722 (US)
(74) Vertreter: Holst, Sönke
(86) Internationale Anmeldenummer: PCT/EP2003/007673
(87) Internationale Veröffentlichungsnummer: WO 2004/017711

(56) Entgegenhaltungen:
- DE-A- 3 135 066
- DE-C- 475 086
- GB-A- 1 557 333

## Beschreibung

### Technisches Gebiet

Die Erfindung betrifft eine Auffangwanne zur Aufnahme von Saatgut aus einer Dosiervorrichtung einer Säeinheit, welche einen Rahmen enthält, wobei der Rahmen eine Aussparung und eine Querstrebe enthält und wobei die Auffangwanne einen schalenförmigen Bereich zur Aufnahme von Saatgut aufweist.

### Stand der Technik

Wenn ein Landwirt von einer Getreideart auf eine andere Getreideart umstellt, oder am Ende einer Säsaison, ist es für den Landwirten notwendig alle Saatgutrückstände aus einer Saatgutdosiervorrichtung zu entfernen. Das Ausräumen der Saatgutdosiervorrichtung ist ein zeitaufwändiger Prozess. Eine Methode besteht darin, die Saatgutdosiervorrichtung und den daran befestigten Behälter abzubauen und die Saatgutdosiervorrichtung mit dem Behälter umzudrehen, so dass das Saatgut in ein bereitgestelltes Behältnis fällt.

Zur Vereinfachung dieses Vorgangs sind einige Saatgutdosiervorrichtungen mit Reinigungsöffnungen versehen, um das Saatgut aus der Saatgutdosiervorrichtung zu entfernen, ohne die Saatgutdosiervorrichtung von der Pflanzeinheit zu entfernen. Auch hierbei wird das Saatgut in ein bereitgestelltes Behältnis geleitet. Derartige Auffangbehältnisse sind aus DE-C-475 086 und GB-A-1 557 333 bekannt.

Problematisch wirkt sich aus, dass die bereitstellbaren Behältnisse umständlich zu handhaben sind und unter Umständen vom Bediener in einer entsprechenden Auffangposition gehalten werden müssen, was die Wartungsarbeiten bzw. Reinigungsarbeiten erschwert und den Bediener unnötig belastet. Bei ungenauer Positionierung des Behältnisses kann Saatgut auf den Boden fallen.

### Aufgabe der Erfindung

Die der Erfindung zu Grunde liegende Aufgabe wird darin gesehen, eine Auffangwanne der eingangs genannten Art anzugeben, durch welche die vorgenannten Probleme überwunden werden.

### Beschreibung der Erfindung

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Auffangwanne für eine Dosiervorrichtung einer Säeinheit vorgeschlagen, welche auf einfache Weise an die Säeinheit unterhalb der Dosiervorrichtung anbringbar ist.

Die Auffangwanne ist abnehmbar an den Rahmen der Säeinheit montiert um Saatgut aus der Dosiervorrichtung aufzunehmen, wenn diese ausgeräumt wird. Die Auffangwanne enthält einen schalenförmigen Bereich zur Aufnahme des Saatguts, einen Querstrebenaufnahmebereich zur Aufnahme einer Querstrebe am Rahmen und einen Haken zum Eingreifen in eine am Rahmen ausgebildete Aussparung. Der schalenförmige Bereich enthält eine erste Endwand, welche mit dem Querstrebenaufnahmebereich und einem Aufnahmebereich für eine vertikale Stütze versehen ist. Der schalenförmige Bereich enthält eine zweite Endwand, welche einen Haken aufweist.

### Beschreibung der Zeichnung

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:

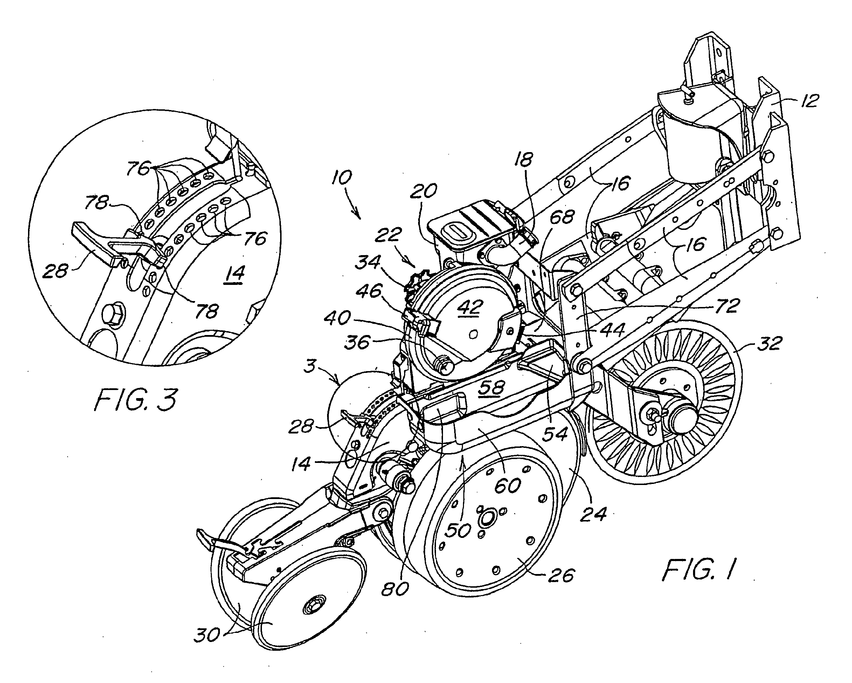

- Fig. 1: eine perspektivische Ansicht einer Reihensäeinheit mit einer montierten Auffangwanne,

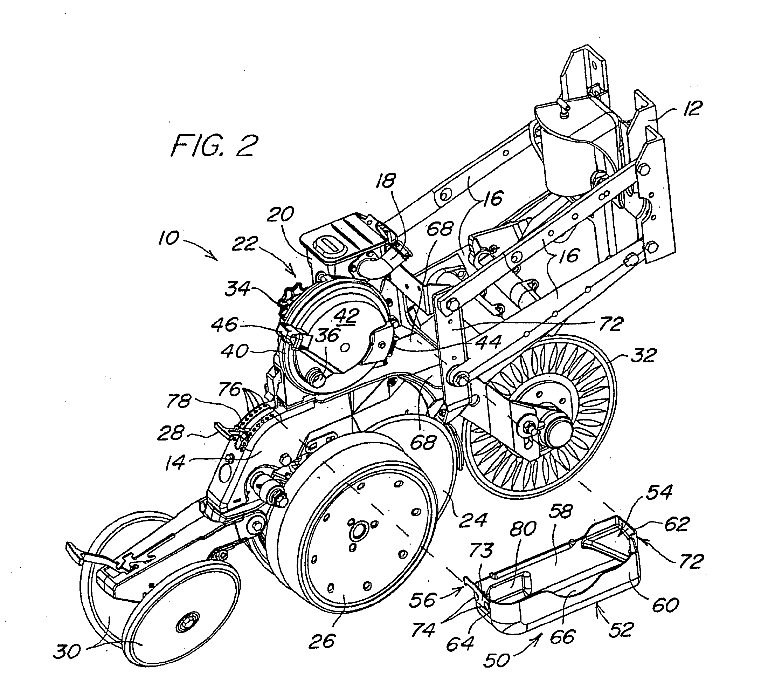

- Fig. 2: eine perspektivische, auseinandergezogene Ansicht der Reihensäeinheit mit abmontierter Auffangwanne und
- Fig. 3: eine vergrößerte perspektivische Ansicht eines Hebels für eine Tiefeneinstellung.

### Detaillierte Beschreibung zur Ausführung der Erfindung

Eine Sämaschine 10 enthält eine einzelne Reihensäeinheit, welche mittels U-förmiger Schrauben, die mit einer Montageplatte 12 in Eingriff stehen, an einen querliegenden Werkzeugträger (nicht gezeigt) montiert ist. Die Säeinheit ist mit einem Rahmen 14 versehen, der über ein Parallelogrammgestänge 16 an die Montageplatte 12 gekoppelt ist. Das Parallelogrammgestänge 16 erlaubt ein begrenztes Heben und Senken der Säeinheit relativ zum Werkzeugträger. Durch ein pneumatisches bedarfsgesteuertes Saatgutabgabesystem wird automatisch Saatgut zu der Säeinheit geleitet. Das bedarfsgesteuerte Saatgutabgabesystem leitet das Saatgut pneumatisch von einem Hauptbehälter (nicht gezeigt) durch einen Saatgutschlauch 18 zu einem auf dem Rahmen 14 montierten Hilfsbehälter 20. Das im Hilfsbehälter 20 befindliche Saatgut wird mittels einer Dosiervorrichtung 22 dosiert und durch ein Saatgutrohr in eine Säfurche geleitet (nicht gezeigt).

Die Säfurche wird durch einen Doppelscheiben-Furchenöffner 24 mit Tiefeneinstellrädern 26 geformt. Die Tiefe der Säfurche wird durch Positionierung des Hebels 28 eingestellt, mit dem die vertikale Position der Tiefeneinstellräder 26 relativ zum Furchenöffner 24 regulierbar ist. Die Säfurche mit dem durch das Saatgutrohr darin abgelegten dosierten Saatgut wird mittels Furchenschließrädern 30 geschlossen. Ein davor montiertes Scheibensech 32 dient zur Zerkleinerung von Pflanzenrückständen bevor diese auf den Furchenöffner 24 treffen.

Die Dosiervorrichtung 22 wird durch eine flexible drehbare Antriebswelle (nicht gezeigt), welche ein Getriebe 34 antreibt, angetrieben. Die flexible und drehbare Antriebswelle entspricht einer Ausführung, wie sie von der Elliot Manifacturing Company, LLC, Bermingham, New York hergestellt und vermarktet wird. Ein durch Bodenhaftung angetriebenes Getriebe (nicht gezeigt) liefert ein Eingangsdrehmoment an die flexible Antriebswelle. Auf diese Weise wird die Drehzahl der Dosiervorrichtung 22 durch die Fahrgeschwindigkeit der Sämaschine 10 gesteuert.

Die dargestellte Dosiervorrichtung 22 ist eine Vakuum-Dosiervorrichtung. Ein Luftschlauch (nicht gezeigt) ist mit einem Lufteinlass 36 der Dosiervorrichtung 22 verbunden und liefert einen Vakuumzugang für die Dosiervorrichtung 22. Auch wenn die beschriebene Erfindung mit einer Vakuum-Dosiervorrichtung 22 ausgestaltet ist, kann sie ebenso bei Druckluft betriebenen oder mechanisch betriebenen Dosiervorrichtungen eingesetzt werden.

Wenn ein Landwirt von einer Getreideart auf eine andere Getreideart umstellt, oder am Ende einer Säsaison, ist es notwendig alle Saatgutrückstände aus der Dosiervorrichtung 22 und dem Hilfsbehälter 20 zu entfernen. Für Wartungszwecke enthält die Dosiervorrichtung 22 zwei Gehäuseteile 40, 42. Das erste Gehäuseteil 40 ist an den Rahmen 14 der Säeinheit montiert. Das zweite Gehäuseteil 42 ist durch ein Scharnier 44 schwenkbar an das erste Gehäuseteil 40 montiert. Das zweite Gehäuseteil 42 ist durch eine Verriegelung 46 mit dem ersten Gehäuseteil 40 verriegelt. Zur Reinigung der Dosiervorrichtung 22 wird die Verriegelung 46 gelöst und das zweite Gehäuseteil 42 über das Scharnier 44 relativ zum ersten Gehäuseteil 40 verschwenkt. Eine im Gehäuse der Dosiervorrichtung 22 positionierte rotierbare Saatgutscheibe wird entnommen und das sich aus dem Hilfsbehälter 20 in der Dosiervorrichtung 22 ansammelnde Saatgut fällt auf den Boden oder in einen Auffangbehälter.

Die gegenwärtige Erfindung richtet sich darauf, einen Auffangbehälter in Form einer Auffangwanne 50 für Saatgut vorzuschlagen. Die Auffangwanne 50 enthält einen schalenförmigen Teil 52, einen Querstrebenaufnahmebereich 54 und einen Haken 56. Der schalenförmige Teil 52 enthält eine erste Seitenwand 58, eine parallele zweite Seitenwand 60, eine erste Endwand 62, eine parallele zweite Endwand 64 und einen Boden 66. Die erste Endwand 62 ist mit dem Querstrebenaufnahmebereich 54 versehen. Der Querstrebenaufnahmebereich 54 umfasst einen eingerückten Bereich der Auffangwanne 50 zur Aufnahme einer sich horizontal erstreckenden Querstrebe 68 des Rahmens 14 der Säeinheit. Die erste Endwand 62 ist auch mit einem Aufnahmebereich 70 für eine vertikale Stütze versehen, der an einer Vertikalstütze 72 am Rahmen 14 der Säeinheit eingreift.

Die zweite Endwand 64 ist mit dem Haken 56 versehen. Der Haken ist aus einer metallischen Lasche 73 geformt, welche mittels Montagebolzen 74 an die zweite Endwand 64 montiert ist. Der Haken 56 greift in eine am Rahmen 14 der Säeinheit ausgebildete Aussparung ein. In der dargestellten Ausführungsform wird die Aussparung durch eine der auf dem Rahmen 14 der Säeinheit eingebrachten Tiefeneinstellöffnungen 76 ausgebildet. In die Tiefeneinstellöffnungen 76 greifen am Tiefeneinstellhebel 28 ausgebildete Zinken 78 ein.

Die erste Seitenwand 58 ist dem Rahmen 14 der Säeinheit benachbart. Die erste Seitenwand 58 ist mit einem verbreiteten Ansatzbereich 80 versehen, der gegen den Rahmen 14 der Säeinheit lehnt, um die Auffangwanne 50 waagerecht zu halten, wenn diese an den Rahmen 14 der Säeinheit montiert ist.

Die Auffangwanne 50 ist abnehmbar an den Rahmen 14 der Säeinheit montiert. Um die Auffangwanne 50 zu montieren, wird die Auffangwanne 50 derart eingesetzt, dass der Querstrebenaufnahmebereich 54 mit der Querstrebe 68 in Eingriff tritt und der Aufnahmebereich 70 an der Vertikalstütze 72 anliegt. Der Haken 56 wird dann in die oberste Tiefeneinstellöffnung 76 eingehakt. Der Landwirt kann dann die Dosiervorrichtung 22 öffnen und die Saatgutscheibe entfernen, um die Dosiervorrichtung 22 und den Hilfsbehälter 20 von Saatgut zu reinigen und das Saatgut in der Auffangwanne 50 aufzufangen. Nachdem der Landwirt die Reinigung einer Dosiervorrichtung 22 beendet hat, kann der Landwirt die Auffangwanne 50 abnehmen und bei der nächsten Säeinheit fortfahren.

## Patentansprüche

1. Auffangwanne (50) zur Aufnahme von Saatgut aus einer Dosiervorrichtung (22) einer Säeinheit, welche einen Rahmen (14) aufweist, wobei der Rahmen (14) eine Aussparung (76) und eine Querstrebe (68) aufweist, wobei die Auffangwanne (50) einen schalenförmigen Bereich (52) zur Aufnahme von Saatgut aufweist, **dadurch gekennzeichnet, dass** die Auffangwanne (50) einen Querstrebenaufnahmebereich (54) zur Aufnahme der Querstrebe (68) und einen Haken (56) zum Eingreifen in die Aussparung (76) am Rahmen (14) der Säeinheit enthält.

2. Auffangwanne (50) nach Anspruch 1, **dadurch gekennzeichnet, dass** der schalenförmige Bereich (52) eine erste und zweite Seitenwand (58, 60), eine erste und zweite Endwand (62, 64), einen Boden (66) und eine offene Oberseite enthält.

3. Auffangwanne (50) nach Anspruch 1 oder 2, **dadurch gekennzeichnet, dass** die erste Endwand (62) mit dem Querstrebenaufnahmebereich (54) versehen ist.

4. Auffangwanne (50) nach einem der vorhergehenden Ansprüche, **dadurch gekennzeichnet, dass** die zweite Endwand (64) mit dem Haken (56) versehen ist.

5. Auffangwanne (50) nach einem der vorhergehenden Ansprüche, **dadurch gekennzeichnet, dass** die erste Endwand (62) mit einem Aufnahmebereich (70) für den Eingriff an einer Vertikalstütze (72) am Rahmen (14) der Säeinheit versehen ist.

6. Auffangwanne (50) nach Anspruch 5, **dadurch gekennzeichnet, dass** die Vertikalstütze (72) an die Querstrebe (68) angrenzt.

7. Auffangwanne (50) nach einem der vorhergehenden Ansprüche, **dadurch gekennzeichnet, dass** die Querstrebe (68) sich horizontal erstreckt.

8. Säeinheit für eine Sämaschine (10) mit einem eine Querstrebe (68) und eine Aussparung enthaltenden Rahmen (14), einer Dosiervorrichtung (22) zur Dosierung von Saatgut, wobei die Dosiervorrichtung (22) ein an den Rahmen (14) montiertes erstes Gehäuseteil (40) und ein an das erste Gehäuseteil (40) montiertes zweites Gehäuseteil (42) aufweist, und einen zur Ausbildung einer Pflanzfurche am Rahmen (14) montierten Furchenöffner (24), **dadurch gekennzeichnet, dass** eine Auffangwanne (50) nach einem der vorhergehenden Ansprüche enthalten ist und dass die Auffangwanne (50) unterhalb des zweiten Gehäuseteils (42) der Dosiervorrichtung (22) angeordnet ist, wobei die Auffangwanne (50) Saatgut aus der Dosiervorrichtung (22) auffängt, wenn das zweite Gehäuseteil (42) relativ zum ersten Gehäuseteil (40) geöffnet ist.

9. Säeinheit nach Anspruch 8, **dadurch gekennzeichnet, dass** ein Tiefeneinstellrad (26) zur Tiefeneinstellung der durch den Furchenöffner (24) ausgebildeten Pflanzfurche enthalten ist und dass das Tiefeneinstellrad (26) operativ mit einem Tiefeneinstellhebel (28) gekoppelt ist, wobei der Tiefeneinstellhebel (28) einen Zinken (78) enthält, welcher in Tiefeneinstellöffnungen (76) am Rahmen (14) eingreift und wobei eine der Tiefeneinstellöffnungen (76) die Aussparung zur Aufnahme des Hakens (56) darstellt.

10. Säeinheit nach Anspruch 8 oder 9, **dadurch gekennzeichnet, dass** das zweite Gehäuseteil (42) der Dosiervorrichtung (22) schwenkbar an das erste Gehäuseteil (40) gekoppelt ist und durch eine Verrieglung (46) fixiert wird.

## Claims

1. Seed receiving tray (50) for receiving seed from a metering device (22) of a planting unit which has a frame (14) provided with a recess (76) and a crossbar (68), said tray (50) having a bowl portion (52) for receiving seed, **characterised in that** the tray (50) has a crossbar-receiving portion (54) for receiving the crossbar (68) and a hook (56) for engaging in the recess (76) on the frame (14) of the planting unit.

2. Seed receiving tray (50) according to claim 1, **characterised in that** the bowl portion (52) has a first and a second side wall (58, 60), a first and a second end wall (62, 64), a base (66) and an open upper side.

3. Seed receiving tray (50) according to claim 1 or 2, **characterised in that** the first end wall (62) is provided with the crossbar-receiving portion (54).

4. Seed receiving tray (50) according to one of the preceding claims, **characterised in that** the second end wall (64) is provided with the hook (56).

5. Seed receiving tray (50) according to one of the preceding claims, **characterised in that** the first end wall (62) is provided with a receiving portion (70) for engaging on a vertical support (72) on the frame (14) of the planting unit.

6. Seed receiving tray (50) according to claim 5, **characterised in that** the vertical support (72) is adjacent to the crossbar (68).

7. Seed receiving tray (50) according to one of the preceding claims, **characterised in that** the crossbar (68) extends horizontally.

8. Planting unit for a seeding machine (10) having a frame (14) which contains a crossbar (68) and a recess, a metering device (22) for metering seed which has a first housing portion (40) mounted on the frame (14) and a second housing portion (42) mounted on the first housing portion (40), and a furrow opener (24) mounted on the frame (14) for forming a planting furrow, **characterised in that** a seed receiving tray (50) according to one of the preceding claims is included and **in that** the seed receiving tray (50) is arranged below the second housing portion (42) of the metering device (22), said tray (50) catching seed from the metering device (22) when the second housing portion (42) is opened relative to the first housing portion (40).

9. Planting unit according to claim 8, **characterised in that** it contains a depth gauge wheel (26) for controlling the depth of the planting furrow formed by the furrow opener (24) and **in that** the depth gauge wheel (26) is operatively coupled to a depth control handle (28), said depth control handle (28) including a prong (78) which engages in depth control apertures (76) on the frame (14) and one of the depth control apertures (76) forming the recess for receiving the hook (56).

10. Planting unit according to claim 8 or 9, **characterised in that** the second housing portion (42) of the metering device (22) is pivotally coupled to the first housing portion (40) and held in place by a latch (46).

## Revendications

1. Bac collecteur (50) destiné à recevoir des semences à partir d'un dispositif de dosage (22) d'une unité de semis, laquelle présente un cadre (14), où le cadre (14) présente un évidement (76) et une barre transversale (68) et où le bac collecteur (50) présente une zone en forme de cuvette (52) pour recevoir des semences, **caractérisé en ce que** le bac collecteur (50) comprend une zone de réception de barre transversale (54) destinée à recevoir la barre transversale (68) et un crochet (56) destiné à s'engager dans l'évidement (76) du cadre (14) de l'unité de semis.

2. Bac collecteur (50) selon la revendication 1, **caractérisé en ce que** la zone en forme de cuvette (52) comprend une première et une deuxième parois latérales (58, 60), une première et une deuxième parois d'extrémité (62, 64), un fond (66) et un côté supérieur ouvert.

3. Bac collecteur (50) selon l'une quelconque des revendications 1 ou 2, **caractérisé en ce que** la première paroi d'extrémité (62) est munie de la zone de réception de la barre transversale (54).

4. Bac collecteur (50) selon l'une quelconque des revendications précédentes, **caractérisé en ce que** la deuxième paroi d'extrémité (64) est munie du crochet (56).

5. Bac collecteur (50) selon l'une quelconque des revendications précédentes, **caractérisé en ce que** la première paroi d'extrémité (62) est munie d'une zone de réception (70) pour l'engagement sur un appui vertical (72) sur le cadre (14) de l'unité de semis.

6. Bac collecteur (50) selon la revendication 5, **caractérisé en ce que** l'appui vertical (72) est adjacent à la barre transversale (68).

7. Bac collecteur (50) selon l'une quelconque des revendications précédentes, **caractérisé en ce que** la barre transversale (68) s'étend horizontalement.

8. Unité de semis pour une machine à semer (10) ayant un cadre (14) comprenant une barre transversale (68) et un évidement, un dispositif de dosage (22) pour le dosage de semences, où le dispositif de dosage (22) présente une première partie de logement (40) montée sur le cadre (14) et une deuxième partie de logement (42) montée sur la première partie de logement (40), et un soc de semoir (24) monté sur le cadre (14) pour la formation d'un sillon de plantation, **caractérisée en ce qu'**un bac collecteur (50) selon l'une quelconque des revendications précédentes est inclus et **en ce que** le bac collecteur (50) est agencé en dessous de la deuxième partie de boîtier (42) du dispositif de dosage (22), le bac collecteur (50) recevant des semences à partir du dispositif de dosage (22) lorsque la deuxième partie de boîtier (42) est ouverte par rapport à la première partie de boîtier (40).

9. Unité de semis selon la revendication 8, **caractérisée en ce qu'**une roue de réglage de profondeur (26) est incluse aux fins du réglage de la profondeur du sillon de plantation formé par le soc de semoir (24) et **en ce que** la roue de réglage de profondeur (26) est couplée de façon opérationnelle avec un levier de réglage de profondeur (28), le levier de réglage de profondeur (28) comprenant une dent (78) qui s'engage dans des ouvertures de réglage de profondeur (76) sur le cadre (14) et l'une des ouvertures de réglage de profondeur (76) constituant l'évidement destiné à la réception du crochet (56).

10. Unité de semis selon l'une quelconque des revendications 8 ou 9, **caractérisée en ce que** la deuxième partie de boîtier (42) du dispositif de dosage (22) est couplée de façon basculante sur la première partie de boîtier (40) et fixée au moyen d'un verrouillage (46).
